# EUROPEAN PATENT SPECIFICATION

(11) **EP 3 145 375 B1**
(45) Date of publication and mention of the grant of the patent: **12.09.2018**
(21) Application number: 15742401.1
(22) Date of filing: 02.07.2015
(51) Int. Cl.: A47J 37/06

(54) **AIR HEATING DEVICE**
LUFTHEIZVORRICHTUNG
DISPOSITIF DE CHAUFFAGE À AIR

(30) Priority: 07.07.2014 NL 2013137
(43) Date of publication of application: 29.03.2017
(73) Proprietor: Farm Frites International B.V., 3227 CD Oudenhoorn (NL)
(72) Inventor: OSINGA, Anne Jurjen, NL-3235 AC Rockanje (NL); HARTOG, Merijn, NL-1121 VZ Landsmeer (NL); MARTENS, René, NL-1051 HC Amsterdam (NL)
(74) Representative: Patentwerk B.V.
(86) International application number: PCT/NL2015/050483
(87) International publication number: WO 2016/007002

(56) References cited:
- WO-A1-98/52418
- WO-A1-2012/032449
- CN-A- 103 142 151
- CN-U- 203 483 269
- US-A1- 2004 035 845

## Description

The present invention relates to an air heating device, in which a product is prepared for consumption by means of hot air.

Such devices are generally known. In order to be attractive to buyers, an air heating device, in addition to the oven generally already present in a kitchen, must have added value and provide universal use. In addition, the purchase of such a device should not place an additional burden on the environment or take up a lot of space or cause noise pollution in the kitchen. Hitherto, these factors stand in the way of wider acceptance by potential buyers and their propensity to purchase, both in the professional kitchen and in the kitchen at home.

The document WO 2012/032449 A1 discloses an air heating device. Therefore, it is an object of the present invention to provide an air heating device which optimally obviates the abovementioned drawbacks, which takes up a limited surface area and which occupies a limited volume, and which is also better accepted by the general public.

To achieve this, the air heating device according to the invention comprises the features mentioned in claim 1.

An advantage of the device according to the invention resides in that the various constituents of the device enable a compact structure which is tailored for universal use, in particular if the heating elements are provided at or against the outside surface of the possibly cylindrical product holder.

If the product holder comprises an air permeable structure only on the upper and lower side, the product holder is integrated in a space-saving manner in the air circulation system during operation of the device.

A further embodiment of the device according to the invention is characterized in that the product holder and the air heating device are arranged such that the product holder is removably placeable therein.

An advantage of this feature resides in that, by virtue thereof, the compact arrangement according to the invention also corresponds, as to the external characteristics thereof and the operations to be performed, to an electric water boiler or coffee maker, which have gained a steady place in today's kitchens.

A still further embodiment of the device according to the invention is characterized in that the air circulation system comprises at least one fan, which is connected to control elements by means of which the direction of the air circulating past the products can be reversed.

This has the advantage that, either manually or periodically, the direction of the air flow through the product holder can be automatically reversed. By virtue thereof, the product can be heated from above or from below as desired, so that the finished product is heated more uniformly. The control elements used for this purpose are either electrical and/or mechanical.

In order to achieve, at a minimal air resistance and a correspondingly low fan power, an optimum distribution of air or heat over the product surface on the upper or lower side, a subsequent embodiment of the air heating device is characterized in that it comprises a manifold space, on the upper side or the lower side, which manifold space is incorporated in the air circulation system and in which a removable or unremovable aerodynamic element is provided which is shaped such that it influences the air inflow/outflow pattern on the relevant side(s).

A further embodiment of the relevant device according to the invention is characterized in that the air heating device comprises an air humidity measuring system with one or more sensors, arranged to measure the air humidity on the upper and/or lower side.

The absolute moisture content and/or the difference in moisture content can be determined after measurement in order to be used as a measure for reporting that the product is ready.

Further detailed, possible embodiments, which are set forth in the remaining claims, are mentioned together with the associated advantages in the following description.

The air heating device according to the present invention will now be explained in greater detail with reference to the figures mentioned below, in which corresponding parts are indicated by means of the same reference numerals. In the Figures:
Figures 1a and 1b are schematic representations of embodiments of the air heating device according to the invention, in which the air circulates in one of two directions;
Figure 2 schematically shows the removable product used in the device shown in figures 1a and 1b;
Figure 3 schematically shows the removable drawer at the bottom of device shown in figures 1a and 1b; and
Figures 4a and 4b show the external shape of the device shown in figures 1a and 1b, and the removed product holder to be used therein, respectively.

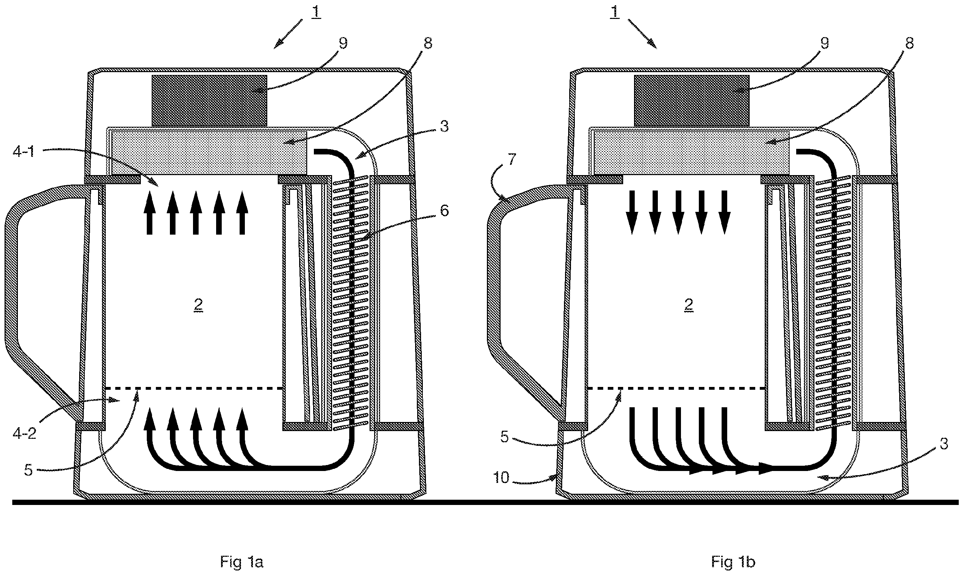

Figure 1 shows an air heating device 1 for products, which may or may not contain starch, which are to provided in a product holder 2. The products, which may or may not be partly pre-packaged, are separately placed in the product holder 2 or they are placed in said product holder 2 in their entirely or partly open or perforated packaging. Preferably the products are packaged in measured weight quantities or measured volume quantities, and the volume and/or the shape of the product holder is adapted to said packaging. By virtue thereof, the device 1 remains compact and does not take up more space than strictly necessary to make the pre-packaged products ready for consumption. In practice a substantial part of the products will have been baked already before they are reheated by the device 1.

The device 1 therefor comprises an air circulation system 3 which causes air to circulate via the upper side 4-1 and the lower side 4-2 of the product holder 2. These sides, hereinafter indicated by means of reference numeral 4 for brevity, are provided with an air-permeable structure 5, for example in the form of a basket or grid. As shown here, the upper side may be open, which is considered here as an air permeable structure for simplicity. If only the upper and lower side(s) 4 are air permeable, then there is no need for air to flow along the side face, so that, as shown here, the device 1 remains slim. In a manner which will be explained in more detail hereinafter, the air can flow from top to bottom or conversely, or it can flow alternately from top to bottom and from bottom to top through the product holder 2 during one heating cycle.

In the air circulating system 3, heating elements 6 are incorporated which heat the air flowing through them that flows from and to the sides above and below the product holder 2. Again preferably, the heating capacity and hence the electric power consumption of the heating elements 6 is such that it is adapted to the abovementioned measured packaging. By virtue thereof, overcapacity, which would lead to a larger volume taken up, is precluded, and in addition the preparation time of the relevant product is known in advance when the heating operation starts, because the preparation temperature is known, so that a user can rely on this and perform other operations in the kitchen in the meantime.

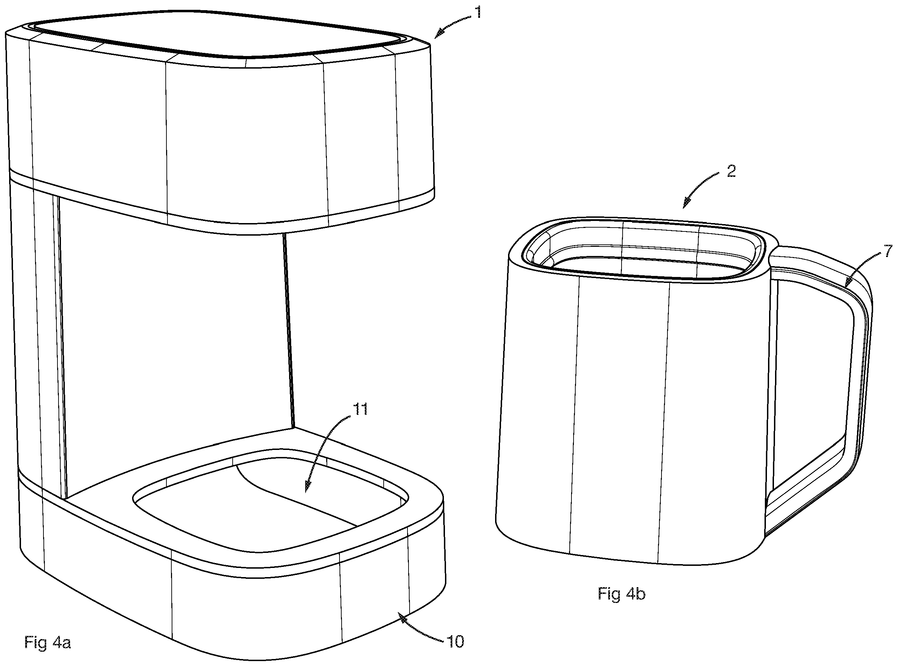

In the embodiment shown in figures 1a and 1b, the heating elements 6, which are of limited width, are arranged in the air circulation system 3 so as to be at or against, or at least close to the preferably cylindrical outer surface of the product holder 2. This provides the device 1 with an attractive asymmetric appearance as shown in figures 4a and 4b.

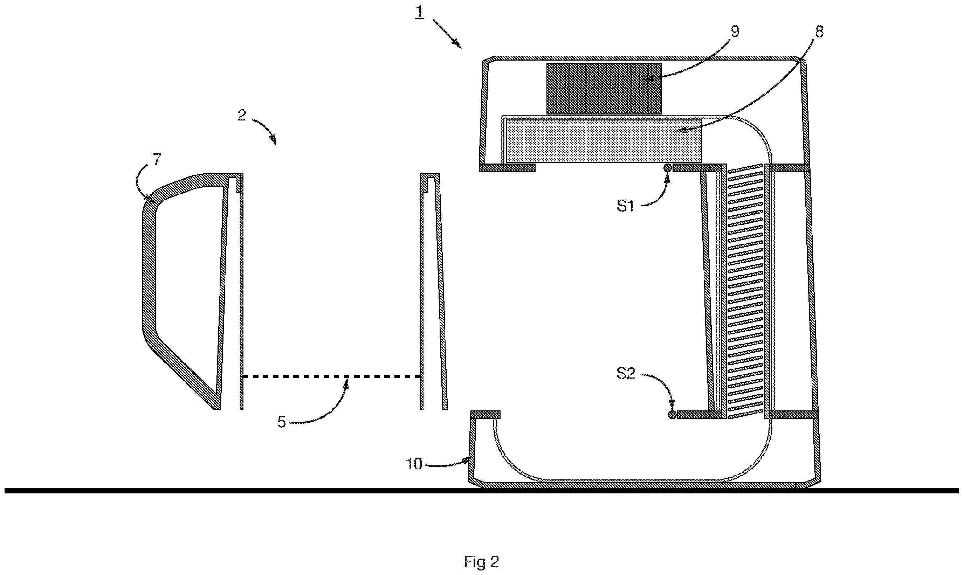

In figure 2, it is schematically shown that the product holder 2 and the air heating device 1 are arranged such that the product holder 2 is removably placeable therein. To enable simple removal and replacement, the product holder 2, which is bounded on the lower side by the grid structure 5, is provided with a grip 7.

In order to be able to rapidly provide a well prepared finished product, the device 1 will in practice comprise at least one fan 8, which is positioned in the air circulation system 3 and, as shown here, above the product holder 2. By means of suitable mechanical or electrical control elements 9, the fan 8 can cause air to flow through the air circulation system 3 in one direction or another. A suitable mechanical control element is an air check valve, which is not shown. Figure 2 schematically shows an electric motor inverter, taking up a limited volume, as the control element 9 for the fan 8, which inverter may be combined, if necessary, with a circuit for controlling the amount of air displacement, for example as a function of time and/or quantities to be explained hereinafter.

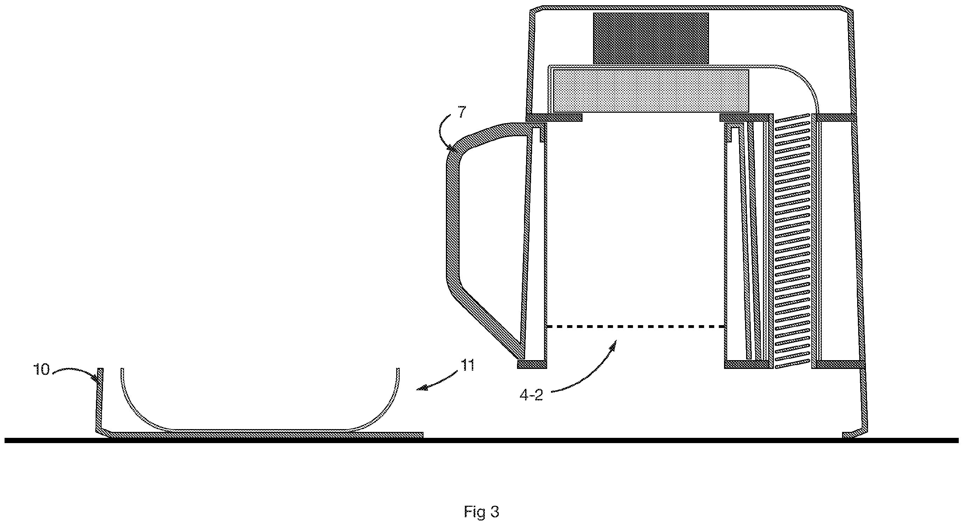

Figure 3 shows that the device 1 comprises a removable drawer 10 arranged at some distance below the lower side 4-2 of the product holder 2. In principle, food residues such as crumbs can collect in the drawer 10 or at least in a part thereof, so that they are not circulated in the air circulation system 3. The fan 8 in the air circulation system 3 will be sufficiently powerful to make the circulated hot air flow uniformly through the product in the product holder 2, so that the product heats up uniformly throughout the volume thereof. Again, the electric power consumption of the fan 8 is preferably adapted to the abovementioned measured packaging of the product, so that the volume and the noise produced by the air circulation system 3 will be minimal. If the dimensions of the fan 8 are sufficient to enable the fan to independently provide a sufficiently uniform air flow through the product in the product holder 2, an air flow distributor is superfluous. For example, on the lower side shown, a detachable or non-detachable aerodynamic element, not shown here, may be provided in a manifold space 11 forming part of the air circulation system 3, said aerodynamic element being shaped such that it influences the air inflow/outflow pattern on the relevant side(s) of the product holder 2 or distributes said pattern according to the requirements. This aerodynamic element could have the shape of a lying fanning-out mushroom that matches the asymmetric structure of the device 1, enabling it, as shown in fig. 1a, to guide air in a uniform manner to the bottom side 4-2 of the product holder 2.

The device 1 may comprise a measuring, control and warning system including corresponding measuring sensors S1 and S2 to measure said quantities, such as temperature and/or humidity of the air particularly on the upper side 4-1 and/or lower side 4-2 and to the determine, based on said values, whether the product is ready. This system is capable of measuring air temperature and/or humidity and particularly the difference in temperature and/or the difference in relative or absolute humidity between said sides. The system is further arranged to determine, based on said values, whether the product is ready and give an audible and/or visual warning.

The above-mentioned drawer 10, the manifold space 11 and/or the aerodynamic element make it possible to add, to the passing air, if necessary in compartments of said parts, dry or moist substances or moisture, which may or may not be spiced and/or aromatized and which are important for the preparation of the products. This could be achieved by placing small interior receptacles, which may or may not be of a disposable type, in said compartments. The use thereof during the heating process adds a desired flavour element to the prepared product. Furthermore, this has a favourable effect on the texture and the moisture content of certain products.

## Claims

1. An air heating device (1) for products, comprising:
- a product holder (2) with at least an upper (4-1) and a lower (4-2) side provided with an air permeable structure (5),
- an air circulation system (3) connected to said upper and lower side, and
- heating elements (6) incorporated in said air circulation system,
wherein:
- said air circulation system (3) is arranged to guide the air passed through the product holder (2) from one of the upper and lower side via the heating elements to the other one of the upper and lower side; **characterized in that**
- the air heating device comprises a temperature measuring system with two or more sensors (S1, S2), arranged to measure the air temperature on the upper and lower side, wherein the temperature measuring system is arranged to determine at least the temperature difference between the air passing on the upper side (4-1) and the lower side (4-2), and to use the measured temperature difference to determine whether the product is ready.

2. The air heating device according to claim 1, **characterized in that** the heating elements (6) are provided at or against the outside surface of the possibly cylindrical product holder.

3. The air heating device according to claim 1 or 2, **characterized in that** the product holder (2) comprises an air permeable structure only on the upper and lower side thereof.

4. The air heating device according to any of the preceding claims,
**characterized in that** the product holder (2) and the air heating device (1) are arranged such that the product holder is removably placeable therein.

5. The air heating device according to any of the preceding claims,
**characterized in that** the air circulation system (3) comprises at least one fan (8), which is connected to control elements (9) by means of which the direction of the air flow circulating through the products can be reversed.

6. The air heating device according to claim 5, **characterized in that** the control elements (9) may be electrically driven, provided with an electric inverter, or mechanically driven, provided with an air check valve.

7. The air heating device according to any of the preceding claims,
**characterized in that** the air heating device (1) comprises, on at least one of the upper side and lower side, a manifold space (11) incorporated in the air circulation system (3), in which manifold space a detachable or non-detachable aerodynamic element is provided which is shaped such that it influences the air inflow/outflow pattern on the relevant side(s).

8. The air heating device according to any of the preceding claims,
**characterized in that** the air heating device (1) comprises an air humidity measuring system with one or more sensors, arranged to measure the humidity on the upper and/or lower side.

9. The air heating device according to claim 8, **characterized in that** the air humidity measuring system is arranged to determine at least the difference in absolute or relative moisture content of the air passing on the upper side and the lower side, and to use the measured difference in absolute or relative moisture content to determine whether the product is ready.

10. The air heating device according to any of the preceding claims,
**characterized in that** the air heating device comprises a removable drawer (10) arranged at some distance below the lower side of the product holder (2) or below the aerodynamic element.

11. The air heating device according to claim 10, **characterized in that** the air heating device (1) is constructed to make the air pass over the drawer (10), if necessary via the aerodynamic element, towards the lower side of the product holder.

12. The air heating device according to claim 10 or 11, **characterized in that** the drawer (10) is built up of one or more compartments suitable for collecting grains, crumbs or residues of the heated products, and/or for providing one or more dry or moist substances or moisture in said compartments, which substances or moisture may or may not be spiced and/or aromatized and which are important for the preparation of the products.

## Patentansprüche

1. Luftheizvorrichtung (1) für Produkte, umfassend:
- einen Produkthalter (2) mit mindestens einer oberen (4-1) und einer unteren (4-2) Seite, die mit einer luftdurchlässigen Struktur (5) ausgestattet sind,
- ein Luftzirkulationssystem (3), das mit der oberen und unteren Seite verbunden ist, und
- Heizelemente (6), die in das Luftzirkulationssystem eingebaut sind, wobei:
- das Luftzirkulationssystem (3) angeordnet ist, um die von einer der oberen und unteren Seite über die Heizelemente durch den Produkthalter (2) hindurch gelangte Luft zu der anderen der oberen und unteren Seite zu führen, **dadurch gekennzeichnet, dass**
- die Luftheizvorrichtung ein Temperaturmesssystem mit zwei oder mehr Sensoren (S1, S2) umfasst, die angeordnet sind, um die Lufttemperatur auf der oberen und unteren Seite zu messen,
wobei das Temperaturmesssystem angeordnet ist, um mindestens die Temperaturdifferenz zwischen der Luft zu messen, die auf die obere Seite (4-1) und die untere Seite (4-2) gelangt, und die gemessene Temperaturdifferenz zu verwenden, um zu bestimmen, ob das Produkt fertig ist.

2. Luftheizvorrichtung nach Anspruch 1, **dadurch gekennzeichnet, dass** die Heizelemente (6) an der Außenfläche des möglicherweise zylindrischen Produkthalters oder gegen diese bereitgestellt werden.

3. Luftheizvorrichtung nach Anspruch 1 oder 2, **dadurch gekennzeichnet, dass** der Produkthalter (2) nur an seiner oberen und unteren Seite eine luftdurchlässige Struktur umfasst.

4. Luftheizvorrichtung nach einem der vorhergehenden Ansprüche, **dadurch gekennzeichnet, dass** der Produkthalter (2) und die Luftheizvorrichtung (1) so angeordnet sind, dass der Produkthalter entfernbar darin platzierbar ist.

5. Luftheizvorrichtung nach einem der vorhergehenden Ansprüche, **dadurch gekennzeichnet, dass** das Luftzirkulationssystem (3) mindestens ein Gebläse (8) umfasst, das mit Steuerelementen (9) verbunden ist, mit denen die Richtung des Luftstroms, der durch die Produkte zirkuliert, umgekehrt werden kann.

6. Luftheizvorrichtung nach Anspruch 5, **dadurch gekennzeichnet, dass** die Steuerelemente (9) elektrisch angetrieben sein können und mit einem elektrischen Wechselrichter ausgestattet sind, oder mechanisch angetrieben und mit einem Luftsperrventil ausgestattet sind.

7. Luftheizvorrichtung nach einem der vorhergehenden Ansprüche, **dadurch gekennzeichnet, dass** die Luftheizvorrichtung (1) auf mindestens einer von der oberen Seite und der unteren Seite einen Verteilerraum (11) umfasst, der in das Luftzirkulationssystem (3) eingebaut ist, wobei in dem Verteilerraum ein abnehmbares oder nicht-abnehmbares aerodynamisches Element bereitgestellt ist, das so geformt ist, dass es das Luftanström-/- ausströmmuster auf der relevanten Seite/den relevanten Seiten beeinflusst.

8. Luftheizvorrichtung nach einem der vorhergehenden Ansprüche, **dadurch gekennzeichnet, dass** die Luftheizvorrichtung (1) ein Luftfeuchtigkeitsmesssystem mit einem oder mehreren Sensoren umfasst, die angeordnet sind, um die Feuchtigkeit auf der oberen und/oder unteren Seite zu messen.

9. Luftheizvorrichtung nach Anspruch 8, **dadurch gekennzeichnet, dass** das Luftfeuchtigkeitsmesssystem angeordnet ist, um mindestens die Differenz des absoluten oder relativen Feuchtigkeitsgehalts der Luft zu ermitteln, die auf die obere Seite und die untere Seite gelangt, und die gemessene Differenz des absoluten oder relativen Feuchtigkeitsgehalts zu verwenden, um zu ermitteln, ob das Produkt fertig ist.

10. Luftheizvorrichtung nach einem der vorhergehenden Ansprüche, **dadurch gekennzeichnet, dass** die Luftheizvorrichtung eine entfernbare Schublade (10) umfasst, die in gewissem Abstand unter der Unterseite des Produkthalters (2) oder unter dem aerodynamischen Element angeordnet ist.

11. Luftheizvorrichtung nach Anspruch 10, **dadurch gekennzeichnet, dass** die Luftheizvorrichtung (1) so konstruiert ist, dass bewirkt wird, dass die Luft über der Schublade (10) hindurch, falls erforderlich mittels des aerodynamischen Elements, zu der Unterseite des Produkthalters gelangt.

12. Luftheizvorrichtung nach Anspruch 10 oder 11, **dadurch gekennzeichnet, dass** die Schublade (10) aus einem oder mehreren Fächern aufgebaut ist, die zum Sammeln von Körnern, Krümeln oder Resten der erwärmten Produkte und/oder zum Bereitstellen von einer oder mehreren trockenen oder feuchten Substanzen oder Feuchtigkeit in den Fächern geeignet sind, wobei die Substanzen oder die Feuchtigkeit gewürzt und/oder aromatisiert sein kann/können oder nicht, und die für die Zubereitung der Produkte von Bedeutung sind.

## Revendications

1. Dispositif de chauffage à air (1) pour des produits, comprenant :
- un support de produit (2) ayant au moins un côté supérieur (4-1) et un côté inférieur (4-2) pourvus d'une structure perméable à l'air (5),
- un système de circulation d'air (3) raccordé auxdits côtés supérieur et inférieur, et
- des éléments chauffants (6) incorporés dans ledit système de circulation d'air, dans lequel :
- ledit système de circulation d'air (3) est conçu pour guider l'air passant à travers le support de produit (2) depuis l'un des côtés supérieur et inférieur par le biais des éléments chauffants vers l'autre des côtés supérieur et inférieur ; **caractérisé en ce que**
- le dispositif de chauffage à air comprend un système de mesure de température ayant au moins deux capteurs (S1, S2), conçus pour mesurer la température de l'air sur les côtés supérieur et inférieur, dans lequel le système de mesure de température est conçu pour déterminer au moins la différence de température entre l'air passant sur le côté supérieur (4-1) et le côté inférieur (4-2) et pour utiliser la différence de température mesurée pour déterminer si le produit est prêt.

2. Dispositif de chauffage à air selon la revendication 1, **caractérisé en ce que** les éléments chauffants (6) sont disposés au niveau de la surface extérieure, ou contre cette dernière, du support de produit peut-être cylindrique.

3. Dispositif de chauffage à air selon la revendication 1 ou 2, **caractérisé en ce que** le support de produit (2) comprend une structure perméable à l'air seulement sur les côtés supérieur et inférieur de ce dernier.

4. Dispositif de chauffage à air selon l'une quelconque des revendications précédentes, **caractérisé en ce que** le support de produit (2) et le dispositif de chauffage à air (1) sont conçus de telle sorte que le support de produit puisse être placé de manière amovible à l'intérieur de ce dernier.

5. Dispositif de chauffage à air selon l'une quelconque des revendications précédentes, **caractérisé en ce que** le système de circulation d'air (3) comprend au moins un ventilateur (8) qui est raccordé à des éléments de commande (9) au moyen desquels la direction du flux d'air circulant à travers les produits peut être inversée.

6. Dispositif de chauffage à air selon la revendication 5, **caractérisé en ce que** les éléments de commande (9) peuvent être entraînés électriquement, pourvus d'un onduleur électrique ou entraînés mécaniquement, pourvus d'un clapet antiretour d'air.

7. Dispositif de chauffage à air selon l'une quelconque des revendications précédentes, **caractérisé en ce que** le dispositif de chauffage à air (1) comprend, sur au moins l'un du côté supérieur et du côté inférieur, un espace de collecteur (11) incorporé dans le système de circulation d'air (3), dans lequel l'espace de collecteur est pourvu d'un élément aérodynamique amovible ou non amovible qui est formé de telle sorte qu'il influence le motif d'admission/de sortie d'air sur le ou les côtés appropriés.

8. Dispositif de chauffage à air selon l'une quelconque des revendications précédentes, **caractérisé en ce que** le dispositif de chauffage à air (1) comprend un système de mesure de l'humidité de l'air ayant un ou plusieurs capteurs, conçus pour mesurer l'humidité sur le côté supérieur et/ou le côté inférieur.

9. Dispositif de chauffage à air selon la revendication 8, **caractérisé en ce que** le système de mesure de l'humidité de l'air est conçu pour déterminer au moins la différence de teneur en humidité absolue ou relative de l'air passant sur le côté supérieur et le côté inférieur, et pour utiliser la différence mesurée de teneur en humidité absolue ou relative pour déterminer si le produit est prêt.

10. Dispositif de chauffage à air selon l'une quelconque des revendications précédentes, **caractérisé en ce que** le dispositif de chauffage à air comprend un tiroir amovible (10) disposé à une certaine distance en dessous du côté inférieur du support de produit (2) ou en dessous de l'élément aérodynamique.

11. Dispositif de chauffage à air selon la revendication 10, **caractérisé en ce que** le dispositif de chauffage à air (1) est construit pour permettre à l'air de passer sur le tiroir (10), si nécessaire par le biais de l'élément chauffant, vers le côté inférieur du support de produit.

12. Dispositif de chauffage à air selon la revendication 10 ou 11, **caractérisé en ce que** le tiroir (10) est composé d'un ou de plusieurs compartiments appropriés pour collecter des grains, des miettes ou des résidus du produit chauffé et/ou pour fournir une ou plusieurs substances sèches ou humides ou de l'humidité dans lesdits compartiments, lesquelles substances ou ladite humidité peuvent être parfumées et/ou aromatisées ou non et sont importantes pour la préparation des produits.
